# EUROPÄISCHE PATENTSCHRIFT

(11) **EP 3 686 151 B1**
(45) Veröffentlichungstag und Bekanntmachung des Hinweises auf die Patenterteilung: **30.06.2021**
(21) Anmeldenummer: 20153529.1
(22) Anmeldetag: 24.01.2020
(51) Int. Cl.: B66F 9/075

(54) **FLURFÖRDERZEUG MIT STANDPLATTFORM**
INDUSTRIAL TRUCK WITH STAND PLATFORM
CHARIOT DE MANUTENTION POURVU DE PLATEFORME D'IMMOBILISATION

(30) Priorität: 25.01.2019 DE 102019101862
(43) Veröffentlichungstag der Anmeldung: 29.07.2020
(73) Patentinhaber: Jungheinrich Aktiengesellschaft, 22047 Hamburg (DE)
(72) Erfinder: LOHMANN, HELMUT, 27404 Gyhum (DE); Schüler, Michael, 23923 Schönberg (DE)
(74) Vertreter: Hauck Patentanwaltspartnerschaft mbB

(56) Entgegenhaltungen:
- EP-A1- 0 485 257
- EP-A1- 2 360 083
- DE-A1-102015 102 583
- JP-A- 2002 128 485

## Beschreibung

Flurförderzeug mit einem Antriebsteil und einer an dem Antriebsteil angeordneten Standplattform für eine Bedienperson, wobei die Standplattform ein um eine fahrzeugfeste erste Schwenkachse verschwenkbares Basiselement und ein an dem Basiselement um eine zweite Schwenkachse verschwenkbar gelagertes Standelement aufweist, wobei die erste Schwenkachse und die zweite Schwenkachse parallel zueinander verlaufen und entlang einer Fahrzeuglängsachse zueinander versetzt angeordnet sind, wobei das Standelement sich oberhalb des Basiselements erstreckend die Standfläche für die Bedienperson bildet, wobei das Basiselement bei seiner Schwenkbewegung um die erste Schwenkachse über eine erste Federung an dem Flurförderzeug abgestützt ist.

Bei Flurförderzeugen mit Standplattformen für eine Bedienperson, also für einen Fahrer des Flurförderzeugs, fährt die Bedienperson auf der Plattform stehend mit dem Flurförderzeug mit. Die Bedienperson steuert dabei das Flurförderzeug über ein oder mehrere Bedienelemente, die insbesondere an einem Deichselkopf angeordnet sind. Standplattformen für solche Flurförderzeuge sind üblicherweise federnd ausgeführt, um den Fahrkomfort zu erhöhen. So werden während des Fahrens auf das Flurförderzeug wirkende Stöße gedämpft auf die Bedienperson übertragen. Es sind unterschiedliche Möglichkeiten bekannt, derartige Standplattformen federnd zu lagern.

So ist beispielsweise aus DE 10 2015 111 178 A1 eine Standplattform bekannt, die über einen um eine Schwenkachse gelagerten Hebelarm an einer sich an einem Rahmen des Flurförderzeugs abstützenden Federanordnung gelagert ist. Die Standplattform selbst wirkt hierbei als konträrer Hebelarm ebenfalls um die Schwenkachse. Steht eine Bedienperson nahe der Schwenkachse, erfährt sie kaum eine Federwirkung, während bei relativ großer Entfernung von der Schwenkachse die Federwirkung unangenehm hoch ist.

Aus DE 10 2006 009 331 A1 ist eine Standplattform bekannt mit einer oberen Bodenplatte, die an einer unteren Bodenplatte gelenkig gelagert ist, wobei zwischen den Bodenplatten ein Federelement angeordnet ist. Hier ist eine hohe Federwirkung nur in der Nähe der Feder gegeben, während mit zunehmendem Abstand von der Feder die Federwirkung stark nachlässt.

EP 1 205 427 A1 beschreibt ein Flurförderzeug mit einer elastisch abgestützten Standplattform mit Federelementen und von den Federelementen getrennt ausgeführten Führungsmitteln, wobei die Führungsmittel über Kreuzstreben mit dem Fahrzeugrahmen und mit der Standplattform in Kontakt stehen. Diese Konstruktion ist sehr aufwendig in Herstellung und Wartung.

Aus DE 10 2013 111 832 A1 ist ein rechteckiges Bodenblech als Standplattform bekannt, welches an jeder seiner Ecken ein Federelement aufweist. Auf einer solchen Standplattform hat eine Bedienperson einen sehr schwammigen Stand und daher große Gleichgewichtsprobleme.

Eingangs erwähnte Standplattformen sind beispielsweise aus DE 10 2015 102 583 A1 bekannt. So ist hier ein Basiselement um eine erste Schwenkachse verschwenkbar an einem Fahrzeugrahmen gelagert und über eine zweite Schwenkachse mit einem Standelement für eine Bedienperson verbunden. Eine Federung erstreckt sich zwischen dem Fahrzeugrahmen und dem Standelement und stützt somit das Standelement wie auch das damit gekoppelte Basiselement gemeinsam gegenüber Bewegungen um ihre Schwenkachsen ab. Zudem verfügt das Standelement über einen vertikalen Abschnitt mit einer Führungsrolle, die bei einer auf die Standplattform wirkenden Gewichtskraft entlang einer fahrzeugfesten Führung abrollt. Diese Konstruktion ist sehr aufwendig. Aus DE 10 2015 102 584 A1 ist eine vergleichbare Standplattform bekannt, welche zusätzlich zwischen Fahrzeugrahmen und Standplattform wirkende, zuschaltbare Dämpfungseinheiten aufweist. Diese Standplattform weist dieselben Nachteile auf.

Dokument EP 04 85257 beschreibt einen Plattformkörper, der eine Platte trägt, die in Bezug auf den Plattformkörper beweglich ist und die von einem dazwischenliegenden elastischen Element zurückgeführt wird, wobei die Platte mit seitlichen Verriegelungsflanschen ausgestattet ist, die mit einem länglichen Schlitz ausgestattet sind, der es ermöglicht, die Platte mit der Drehachse des Plattformkörpers gelenkig zu verbinden. Dieses Dokument offenbart die Merkmale des Oberbegriffs von Anspruch 1.

Ausgehend von dem erläuterten Stand der Technik liegt der Erfindung die Aufgabe zugrunde, ein Flurförderzeug mit einer Standplattform bereitzustellen, die in konstruktiv einfacher Weise eine gleichmäßige Federung über die gesamte Fläche der Standplattform erlaubt.

Die Erfindung löst die Aufgabe durch ein Flurförderzeug gemäß Anspruch 1. Vorteilhafte Ausgestaltungen sind Gegenstand der Unteransprüche, der Beschreibung sowie der Figuren.

Bei dem erfindungsgemäßen Flurförderzeug der eingangs genannten Art ist das Standelement bei seiner Schwenkbewegung um die zweite Schwenkachse über eine zweite Federung abgestützt und die erste Federung ist entlang der Fahrzeuglängsachse in einem Abstand zu der ersten Schwenkachse angeordnet.

Das Flurförderzeug kann neben dem Antriebsteil auch einen Lastteil aufweisen, wobei der Lastteil insbesondere einen Hubmast und/oder Lastgabeln aufweisen kann. Der Antriebsteil kann insbesondere einen Antrieb, beispielsweise einen Elektromotor und den Elektromotor mit Leistung versorgende Batterien aufweisen. Das Flurförderzeug kann beispielsweise ein Gabelstapler sein, insbesondere ein Hochhub- oder ein Niederhubwagen. Die Standplattform umfasst das Standelement und das Basiselement und ist somit zweiteilig ausgebildet. Das Standelement erstreckt sich zumindest in einer Verwendungsstellung der Standplattform oberhalb des Basiselements und bildet die Standfläche für die Bedienperson. Das Basiselement ist um die fahrzeugfeste erste Schwenkachse verschwenkbar und dabei über die erste Federung an dem Fahrzeug, beispielsweise an einem Fahrzeugrahmen, insbesondere einem Antriebsrahmen des Antriebsteils, abgestützt. Mit fahrzeugfester Schwenkachse ist eine flurförderzeugfeste Schwenkachse gemeint. Die Begriffe Fahrzeug und Flurförderzeug werden vorliegend synonym verwendet. Von dem Basiselement grundsätzlich unabhängig kann das Standelement um die zweite Schwenkachse verschwenkt werden.

Erfindungsgemäß ist eine von der ersten Federung separat ausgebildete zweite Federung vorgesehen, die das Standelement abstützt. Die Federungen stützen das Basiselement bzw. das Standelement jeweils unabhängig voneinander ab. So stützt die erste Federung das Basiselement ab, beispielsweise gegenüber einem Unterboden des Fahrzeugs. Die zweite Federung stützt unabhängig von der ersten Federung das Standelement ab, beispielsweise ebenfalls gegenüber einem Unterboden des Fahrzeugs oder gegenüber dem Basiselement. Die erste Federung und die zweite Federung sind nicht identisch, können beispielsweise durch getrennte Federelemente realisiert sein. Die erste Federung und die zweite Federung können insbesondere entlang der Fahrzeuglängsachse zueinander versetzt sein, wie noch erläutert wird. Zudem ist die erste Federung erfindungsgemäß entlang der Fahrzeuglängsachse von der ersten Schwenkachse beabstandet. Die erste Federung ist bezogen auf die Fahrzeuglängsachse also nicht an derselben Längenposition wie die erste Schwenkachse angeordnet. Beispielsweise kann die erste Schwenkachse an einem ersten Ende des Basiselements und die erste Federung an einem dem ersten Ende entlang der Fahrzeuglängsachse gegenüberliegenden zweiten Ende des Basiselements angeordnet sein. Auch kann die zweite Federung entlang der Fahrzeuglängsachse in einem Abstand zu der zweiten Schwenkachse angeordnet sein.

Eine solche Standplattform ist konstruktiv einfach, insbesondere kann in konstruktiv einfacher Weise auf einen vertikalen Abschnitt mit einer Führungsrolle verzichtet werden, wie er bei der Standplattform der eingangs erläuterten DE 10 2015 102 583 A1 vorgesehen ist. Bei der dort beschriebenen Standplattform werden mit dem vertikalen Abschnitt einseitige Hebelkräfte ausgeglichen, die insbesondere durch die nur einseitige Federung entstehen. Bei der Erfindung hingegen erfolgt ein Ausgleich solcher Hebelkräfte insbesondere bedingt durch das Versetzen der ersten Federung fort von der ersten Schwenkachse und durch die Abstützung der Schwenkbewegung um die zweite Schwenkachse über eine zweite Federung. Dies ist nicht nur konstruktiv weniger aufwändig sondern auch in der Wartung. Zudem ermöglicht die erfindungsgemäße Standplattform über ihre gesamte Fläche eine sehr gleichmäßige Federung.

Nach einer Ausgestaltung sind die erste Federung und die zweite Federung entlang der Fahrzeuglängsachse zueinander versetzt. Durch ein solches Versetzen können die Federungen die Bewegungen um die jeweiligen Schwenkachsen besonders gut abstützen, also dämpfen. Insbesondere können die Hebelkräfte der durch das Basiselement und das Standelement jeweils gebildeten Hebel gut und konstruktiv einfach abgefangen werden.

Nach einer Ausgestaltung ist die erste Schwenkachse an einem ersten Ende des Basiselements und die erste Federung an einem dem ersten Ende entlang der Fahrzeuglängsachse gegenüberliegenden zweiten Ende des Basiselements zwischen dem Basiselement und einem sich unterhalb des Basiselements erstreckenden Unterboden des Flurförderzeugs angeordnet. Auf diese Weise kann die erfindungsgemäße Beabstandung der ersten Federung zu der ersten Schwenkachse entlang der Fahrzeuglängsachse besonders einfach realisiert werden. Die erste Federung ist dabei insbesondere derart an dem zweiten Ende des Basiselements angeordnet, dass die durch das Basiselement bei seiner Bewegung um die erste Schwenkachse ausgeübten Hebelkräfte optimal gedämpft werden. Die zweite Federung kann dabei entlang der Fahrzeuglängsachse zu der ersten Federung versetzt sein. Insbesondere kann die zweite Schwenkachse an einem ersten Ende des Standelements und die zweite Federung an einem dem ersten Ende entlang der Fahrzeuglängsachse gegenüberliegenden zweiten Ende des Standelements angeordnet sein. Somit können auch die Hebelkräfte des Standelements bei seiner Bewegung um die zweite Schwenkachse gut ausgeglichen werden. Die Abstützung des Standelements über die zweite Federung kann dabei über das Basiselement oder über das Flurförderzeug direkt erfolgen, wie später noch erläutert wird.

Nach einer Ausgestaltung ist die erste Federung an einem sich von dem Basiselement erstreckenden Hebelarm angeordnet, der sich entlang der Fahrzeuglängsachse von den beiden Schwenkachsen forterstreckt. Der Hebelarm kann sich insbesondere zu einem Lastteil des Flurförderzeugs hin erstrecken. Das Basiselement kann mit dem Hebelarm eine Art Wippe bilden, die um die erste Schwenkachse verschwenkbar gelagert ist. Die gesamte Standplattform kann somit hebelartig an dem Flurförderzeug gelagert sein. Nach dieser Ausgestaltung kann die erste Federung anstatt oder zusätzlich zu der zuvor erläuterten Anordnung zwischen einem Ende des Basiselements und einem Unterboden des Flurförderzeugs über den sich von dem Basiselement forterstreckenden Hebelarm angeordnet sein, wobei der Hebelarm insbesondere an dem Ende des Basiselements angreifen kann, an dem die erste Schwenkachse angeordnet ist. Somit kann das Basiselement und damit insbesondere die gesamte Standplattform auch über ein von der zweiten Schwenkachse fort in Richtung des Lastteils ragendes Ende an dem Flurförderzeug abgestützt sein. Beispielsweise kann die erste Federung mit einem Antriebsrahmen des Flurförderzeugs verbunden sein. Das Basiselement kann über die erste Federung an dem Antriebsrahmen aufgehängt sein. Auch hierdurch kann die erfindungsgemäße Beabstandung der ersten Federung zu der ersten Schwenkachse entlang der Fahrzeuglängsachse besonders realisiert werden. Hierbei kann auf die zuvor erläuterte Abstützung gegenüber einem Unterboden verzichtet werden, wodurch die erfindungsgemäße Standplattform insbesondere auch ein- und ausklappbar ausgestaltet werden kann.

Nach einer Ausgestaltung ist die zweite Federung derart angeordnet, dass die durch die zweite Federung ausgeübte Federwirkung im Bereich der ersten Schwenkachse am größten ist und/oder die erste Federung ist derart angeordnet, dass die durch die erste Federung ausgeübte Federwirkung im Bereich der zweiten Schwenkachse am größten ist. Wie eingangs erläutert, ist häufig gerade im Bereich der jeweiligen Schwenkachse die die Bewegung um diese Schwenkachse federnde Federung am schwächsten, während mit zunehmender Entfernung von der jeweiligen Schwenkachse aufgrund des sich verlängernden Hebelarms die Federwirkung größer wird. Nach dieser Ausgestaltung werden die erste Federung und/oder die zweite Federung derart angeordnet, dass dieser Nachteil ausgeglichen wird. Dies kann insbesondere durch die oben erläuterten Anordnungen der ersten Federung bzw. der zweiten Federung erreicht werden. Beispielsweise kann dies erreicht werden durch Anordnung der zweiten Federung im Bereich der ersten Schwenkachse und/oder durch Anordnung der ersten Federung im Bereich der zweiten Schwenkachse.

Nach einer Ausgestaltung ist die zweite Federung im Bereich der ersten Schwenkachse angeordnet und/oder die erste Federung ist im Bereich der zweiten Schwenkachse angeordnet. Hierdurch kann das Standelement bei seiner Schwenkbewegung um die zweite Schwenkachse im Bereich der ersten Schwenkachse an dem Basiselement oder aber auch an dem Flurförderzeug direkt abgestützt sein, wie oben bereits angesprochen. So kann aufgrund der zweiten Federung auch im Bereich der ersten Schwenkachse - wo die erste Federung meist kaum eine Federwirkung entfaltet - bzw. aufgrund der ersten Federung auch im Bereich der zweiten Schenkwachse - wo die zweite Federung meist kaum eine Federwirkung entfaltet - eine ausreichend hohe Federwirkung erreicht werden. Im Bereich der jeweiligen Schwenkwachse bezeichnet hierbei die räumliche Nähe zur der jeweiligen Schwenkachse, also die Positionierung der jeweiligen Federung in räumlicher Nähe zur jeweils anderen Schwenkachse. Die räumliche Nähe kann insbesondere derart gewählt sein, dass die durch die erste Federung ausgeübte Federwirkung im Bereich der zweiten Schwenkachse am größten ist bzw. dass die durch die zweite Federung ausgeübte Federwirkung im Bereich der ersten Schwenkachse am größten ist.

Nach einer Ausgestaltung verläuft die erste Schwenkachse an einem mit dem Flurförderzeug verbundenen ersten Ende des Basiselements und die zweite Schwenkachse an einem dem ersten Ende auf der Fahrzeuglängsachse gegenüberliegenden zweiten Ende des Basiselements. Das zweite Ende kann insbesondere ein freies Ende des Basiselements sein. Die zwei Schwenkachsen können also insbesondere an einander gegenüberliegenden Enden des Basiselements verlaufen. Zudem kann die zweite Schwenkachse an einem ersten Ende des Standelements verlaufen, welches einem zweiten, insbesondere freien Ende des Standelements gegenüberliegen kann.

Nach einer Ausgestaltung ist das Standelement bei seiner Schwenkbewegung um die zweite Schwenkachse über die zweite Federung an dem Basiselement und/oder an dem Flurförderzeug abgestützt. Wie bereits angesprochen, kann das Standelement an dem Flurförderzeug direkt abgestützt sein. Die zweite Federung kann dann zwischen dem Standelement und dem Flurförderzeug angeordnet sein, insbesondere zwischen einem Ende des Standelements und einem Antriebsrahmen des Flurförderzeugs. Auch kann die zweite Federung jedoch die Schwenkbewegung des Standelements um die zweite Schwenkachse an dem Basiselement und insbesondere nicht unmittelbar an dem Flurförderzeug abstützen. Die zweite Federung kann beispielsweise zwischen dem Standelement und dem Basiselement angeordnet sein. Das Basiselement kann das Standelement hierbei insbesondere tragen. Das Standelement kann ohne direkten Kontakt zum Flurförderzeug nur über das Basiselement an dem Flurförderzeug angeordnet sein. Bei dieser Abstützung des Standelements an dem Basiselement sind sowohl das Standelement als auch das Basiselement - also letztlich die gesamte Standplattform - um die erste Schwenkachse verschwenkbar und über die erste Federung an dem Flurförderzeug abgestützt. Insbesondere kann eine Abstützung mittels der ersten Federung an einem Fahrzeugrahmen, beispielsweise einem Antriebsrahmen des Antriebsteils, erfolgen, wie bereits erwähnt. Eine gemeinsame Abstützung von Standelement sowie Basiselement über lediglich eine Federung würde jedoch nicht über die gesamte Fläche der Standplattform eine gleichmäßige Federwirkung erlauben, sondern führt, wie eingangs erläutert, zu einer variierenden Federkraft abhängig von der Entfernung zu der Federung. Dies liegt insbesondere daran, dass ein um die erste Schwenkachse wirkender Hebelarm je nach Standposition der Bedienperson auf der Standplattform eine unterschiedliche Länge aufweist. Dieser Nachteil wird durch die erfindungsgemäße zweite Federung ausgeglichen, die nach der vorliegenden Ausgestaltung das Standelement gegenüber dem Basiselement abstützt. Die zweite Federung kann also insbesondere an den Stellen der Standplattform eine starke Federwirkung entfalten, wo aufgrund der ersten Federung nur eine geringe Federwirkung erzeugt werden kann. Entsprechend kann die zweite Federung dort eine geringe Federwirkung entfalten, wo die erste Federung eine große Federwirkung entfaltet. Insbesondere kann hierfür das Abstützen des Standelements an dem Basiselement über die zweite Federung im Bereich der ersten Schwenkachse erfolgen. Es kann somit ein hoher Komfort für die Bedienperson für eine Standplattform mit zwei Schwenkachsen erreicht werden.

Nach einer Ausgestaltung weist das Basiselement zwei Tragarme und einen die Tragarme miteinander verbindenden Querarm auf. Nach einer diesbezüglichen Ausgestaltung ist die zweite Federung zwischen dem Querarm und dem Standelement angeordnet. Das Standelement kann also insbesondere an dem Querarm des Basiselements abgestützt sein. Eine derartige Konstruktion ist besonders einfach und dennoch stabil.

Nach einer Ausgestaltung ist die Standplattform um die erste Schwenkachse verstellbar ausgebildet zwischen einer ausgeklappten Verwendungsstellung, in der sich das Standelement im Wesentlichen horizontal erstreckt, und einer eingeklappten Verstaustellung an das Flurförderzeug, in der sich das Standelement im Wesentlichen vertikal erstreckt. Die Standplattform kann also einklappbar bzw. ausklappbar ausgebildet sein. Wird das Flurförderzeug nicht verwendet, kann die Standplattform an das Flurförderzeug eingeklappt, insbesondere hochgeklappt, und damit verstaut werden. Für die Verwendung des Flurförderzeugs kann die Standplattform aus der Verstaustellung in die Verwendungsstellung ausgeklappt, insbesondere heruntergeklappt, und durch eine Bedienperson genutzt werden. Hierbei ist bevorzugt das Standelement an dem Basiselement abgestützt und bewegt sich bei einer entsprechenden Bewegung des Basiselements um die erste Schwenkachse auch das Standelement mit. Somit wird also die gesamte Standplattform zwischen Verstaustellung und Verwendungsstellung bewegt. Die Standplattform kann dabei insbesondere um eine Schwenkrichtung um die erste Schwenkachse bewegt werden, die entgegengesetzt zu der Schwenkbewegung um die erste Schwenkachse ist, bei der die erste Federung das Basiselement gegenüber dem Fahrzeug abstützt. Die Standplattform kann somit in praktischer Weise verstaut werden.

Nach einer Ausgestaltung weisen die erste Federung und die zweite Federung unterschiedliche Federkräfte auf. Da unterschiedliche Federungen vorgesehen sind, besteht auch die Möglichkeit, unterschiedliche Federkräfte für die unterschiedlichen Federungen vorzusehen. Die Federkräfte der Federungen können sich dabei derart unterscheiden, dass die oben erläuterte gleichmäßige Federwirkung über die gesamte Fläche der Standplattform erreicht werden kann. So kann beispielsweise die vorgesehene Federkraft für eine Federung davon abhängen, an welcher Stelle die jeweilige Federung an das Basiselement bzw. das Standelement angreift. Es können somit Hebelarme unterschiedlicher Länge berücksichtigt werden.

Nach einer Ausgestaltung umfasst die erste Federung und/oder die zweite Federung ein oder mehrere Federelemente aus der folgenden Menge: Stahlfeder, Schraubenfeder, Tellerfeder, Elastomerfeder, Gummifeder. Die Schraubenfeder kann aus Stahl bestehen, die Elastomerfeder kann beispielsweise eine Polyurethan-Feder sein.

Nach einer Ausgestaltung umfasst das Flurförderzeug einen Fixierungsmechanismus, der das Standelement an dem Basiselement, insbesondere lösbar, fixiert. Der Fixierungsmechanismus zumindest zwei zueinander korrespondierende Fixierungsmittel aufweisen, wobei ein erstes Fixierungsmittel an dem Standelement und ein zweites Fixierungsmittel an dem Basiselement angeordnet sein kann. Der Fixierungsmechanismus kann als Fixierungsmittel beispielsweise einen in eine Bolzenaufnahme eingreifenden Bolzen umfassen oder eine in eine Aufnahme eingreifende Schraube, die insbesondere über eine Mutter an der Aufnahme gehalten sein kann. Nach einer diesbezüglichen Ausgestaltung ist über den Fixierungsmechanismus die Federwirkung der zweiten Federung einstellbar. Eine solche Einstellbarkeit kann beispielsweise durch das Verändern der Komprimierung der zweiten Federung erreicht werden, insbesondere durch Verändern der Distanz zwischen Standelement und Basiselement. Hierfür kann beispielsweise eine Schraube weiter angezogen werden.

Ausgestaltungen der Erfindung werden im Folgenden anhand von Figuren erläutert. Es zeigen:
- Figur 1: ein Flurförderzeug in einer perspektivischen Ansicht,
- Figur 2: eine erfindungsgemäße Standplattform mit voneinander separiertem Standelement und Basiselement,
- Figur 3: die Standplattform aus Figur 2 in verbundenem Zustand von Standelement und Basiselement in einer seitlichen Schnittansicht,
- Figur 4: eine schematische Darstellung einer erfindungsgemäßen Standplattform in einer Verwendungsstellung,
- Figur 5: die Standplattform aus Figur 4 in einer Verstaustellung,
- Figur 6: eine weitere Ausgestaltung einer Standplattform in einer schematischen Ansicht, und
- Figur 7: eine weitere Ausgestaltung einer Standplattform in einer schematischen Ansicht.

Soweit nichts anderes angegeben ist, bezeichnen im Folgenden gleiche Bezugszeichen gleiche Gegenstände.

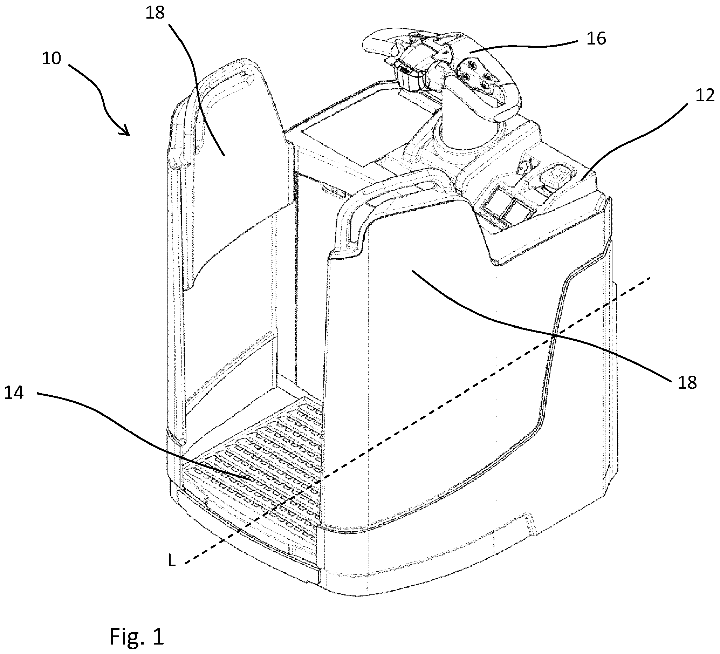

In Figur 1 ist ein erfindungsgemäßes Flurförderzeug 10 mit einem Antriebsteil 12 und einer Standplattform 14 ersichtlich. Das Antriebsteil 12 weist einen Deichselkopf 16 auf mit Bedienelementen zum Steuern des Flurförderzeugs durch eine auf der Standplattform 14 stehende Bedienperson. Die Standplattform 14 wird durch seitliche Haltestreben 18 teilweise umrahmt, welche einer auf der Standplattform befindlichen Bedienperson insbesondere in Kurvenfahrten Halt bieten. An der Frontseite des Flurförderzeugs 10 kann angrenzend an das Antriebsteil 12, auf der der Standplattform 14 gegenüberliegenden Seite des Antriebsteils 12, ein Lastteil vorgesehen sein. Ein solches, nicht dargestelltes Lastteil dient dem Bewegen von Lasten durch das Flurförderzeug 10.

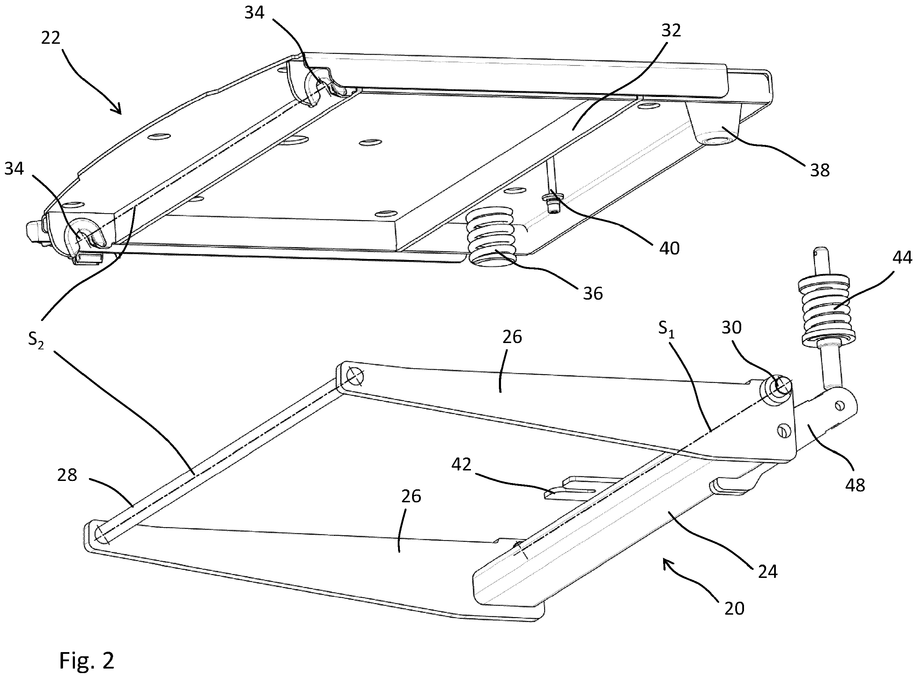

Die Standplattform 14 in Figur 2 in einer Explosionsdarstellung ersichtlich, wobei deutlich wird, dass die Standplattform zweiteilig ausgebildet ist. Die Standplattform 14 umfasst ein Basiselement 20 und ein Standelement 22. Das Basiselement 20 umfasst einen Querarm 24, welcher zwei parallel zueinander verlaufende Tragarme 26 an einem ersten ihrer Enden miteinander verbindet. An den gegenüberliegenden Enden der Tragarme 26 erstreckt sich eine Lagerstange 28 zwischen den Tragarmen. Das Basiselement 20 ist über an dem ersten Ende der Tragarme 26 angeordnete Lagerzapfen 30 in nicht dargestellter Weise am Antriebsrahmen des Flurförderzeugs 10 schwenkbar gelagert. Die sich jeweils von den Außenseiten der einander gegenüberliegenden Tragarme 26 forterstreckenden Lagerzapfen 30 können hierzu in korrespondierend ausgebildeten Lageraufnahmen im Antriebsrahmen aufgenommen sein. Das Basiselement 20 ist somit fahrzeugfest an dem Flurförderzeug verschwenkbar um eine erste Schwenkachse S₁ gelagert, welche sich durch die einander gegenüberliegenden Lagerzapfen 30 erstreckt.

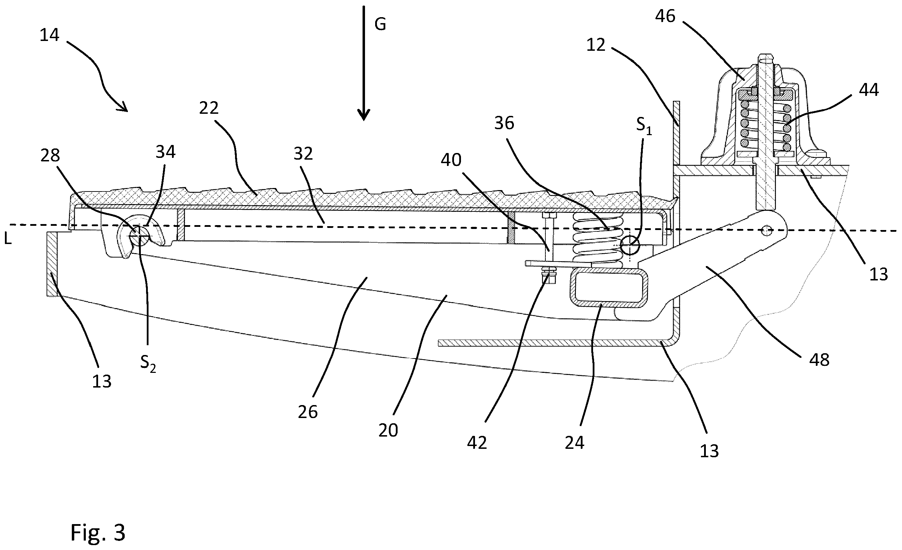

Das Standelement 22 ist flächig ausgebildet und verfügt im vorliegenden Ausführungsbeispiel über an seiner Unterseite verlaufende Verstärkungsstreben 32. Lageraufnahmen 34, ausgebildet an einem ersten Ende des Standelements 22, nehmen im mit dem Basiselement 20 verbundenen Zustand dessen Lagerstange 28 auf. Das Standelement 22 ist somit an dem Basiselement 20 um eine zweite Schwenkachse S2 verschwenkbar gelagert, welche sich durch die einander gegenüberliegenden Lageraufnahmen 34 und die Lagerstange 28 erstreckt. An einem dem ersten Ende gegenüberliegenden zweiten Ende des Standelements 22 ist eine zweite Federung angeordnet, welche zwei Federelemente umfasst, von denen ein erstes Federelement 36 als Schraubenfeder und ein zweites Federelement 38 als Gummifeder ausgebildet sind. Natürlich sind üblicherweise beide Federelemente als Schraubenfedern oder Gummifeder oder anderweitig ausgebildet. Über die Federelemente 36, 38 ist das Standelement 22 an dem Querarm 24 des Basiselements 20 abgestützt, wie insbesondere in Figur 3 zu erkennen.

Figur 3 zeigt die zweiteilige Standplattform im verbundenen Zustand von Basiselement 20 und Standelement 22 in einer Schnittansicht, wobei in der erläuterten Weise die Lagerstange 28 in die Lageraufnahmen 34 aufgenommen ist und die Federelemente 36 sowie das in Figur 3 nicht ersichtliche Federelement 38 in Kontakt mit dem Querarm 24 treten. Um zu verhindern, dass sich das Standelement 22 von dem Basiselement 20 löst, ist ein Fixierungsmechanismus vorgesehen, umfassend eine sich von dem Standelement 22 in Richtung des Basiselements 20 erstreckende Schraube 40 und ein an dem Basiselement 20 angeordneten Schraubenaufnehmer 42. Im miteinander verbundenen Zustand von Standelement 22 und Basiselement 20 greift die Schraube 40 in den Schraubenaufnehmer 42 ein und kann von der von dem Standelement 22 abgewiesenen Seite des Schraubenaufnehmers 42 mit einer Mutter befestigt werden. Somit wird das Standelement 22 an dem Basiselement 20 sicher in lösbarer Weise gehalten. Zudem kann über den Fixierungsmechanismus die Härte der zweiten Federung eingestellt werden. Mit zunehmendem Aufschrauben der Mutter auf der Schraube 40 wird die Standplattform 22 näher an das Basiselement 20 herangezogen und somit werden die Federelemente 36, 38 der zweiten Federung stärker komprimiert. In Figur 3 ist zudem ersichtlich, dass das Basiselement 20 mit einer ersten Federung 44 an einem Antriebsrahmen 13 des Flurförderzeugs abgestützt ist. Die erste Federung 44, vorliegend umfassend eine Schraubenfeder, ist hierfür in einer mit dem Fahrzeugrahmen 13 verbundenen Glocke 46 angeordnet. Die erste Federung 44 ist entlang einer Fahrzeuglängsachse L in einem Abstand zu der ersten Schwenkachse S₁ angeordnet. Auch die Schwenkachsen S₁, S2 sind zueinander entlang der Fahrzeuglängsachse L beabstandet.

Wird nun die Standplattform 14 mit Gewicht belastet, beispielsweise durch eine auf die Standplattform steigende Bedienperson, so wirkt eine Gewichtskraft entlang der in Figur 3 mit G gekennzeichneten Pfeillinie auf die Standplattform 14. Hierdurch wird zum einen die gesamte Standplattform 14, also sowohl das Standelement 22 wie auch das Basiselement 20 um die erste Schwenkachse S₁ verschwenkt. Diese Bewegung wird über die erste Federung 44 abgestützt. So wird über einen sich von der ersten Schwenkachse S₁ in das Antriebsteil hineinerstreckenden Hebelarm 48 das erste Federelement 44 komprimiert. Zudem wird auch das Standelement 22 um die zweite Schwenkachse S₂ verschwenkt, wodurch die zweite Federung 36, 38 komprimiert wird. Es erfolgt somit eine doppelte Federung der Bedienperson. Die jeweiligen Federungen können dabei die Nachteile der jeweils anderen Federung ausgleichen. So ist vorliegend die erste Federung 36, 38 im Bereich der ersten Schwenkachse S₁ angeordnet, das Standelement 22 erfährt also im Bereich der ersten Schwenkachse S₁ über die zweite Federung 36, 38 eine große Federwirkung. Gerade im Bereich der ersten Schwenkachse ist die Federwirkung der ersten Federung 44 aufgrund einer geringen Hebelwirkung besonders gering. Im Bereich der zweiten Schwenkachse S₂ ist aufgrund eines sehr großen wirkenden Hebels in Bezug auf die erste Schwenkachse S₁ die Federwirkung der ersten Federung 44 groß und die Federwirkung durch die zweite Federung 36, 38 aufgrund der großen Distanz zu dieser Federung gering. Nimmt in einer Richtung von dem Antriebsteil 12 fort, in Figur 3 also von rechts nach links, die Federwirkung der zweiten Federung 36, 38 immer weiter ab, so nimmt jedoch die Federwirkung der ersten Federung 44 immer weiter zu. Die zweite Federung ist also derart angeordnet, dass die durch die zweite Federung ausgeübte Federwirkung im Bereich der ersten Schwenkachse am größten ist und die erste Federung ist derart angeordnet, dass die durch die erste Federung ausgeübte Federwirkung im Bereich der zweiten Schwenkachse am größten ist.

Die Beabstandung der ersten Federung 44 und der ersten Schwenkachse S₁ zueinander entlang der Längsachse L über den Hebelarm 48 erlaubt eine konstruktiv einfach Aufhängung des Basiselements 20 und damit vorliegend der gesamten Standplattform 14 an dem Antriebrahmen 13.Die erfindungsgemäße Standplattform ermöglicht also in konstruktiv einfacher Weise, insbesondere ohne die Notwendigkeit eines vertikalen Abschnitts mit einer an dem Antriebsrahmen abrollenden Führungsrolle, eine gleichmäßige Federung über die gesamte Standplattform.

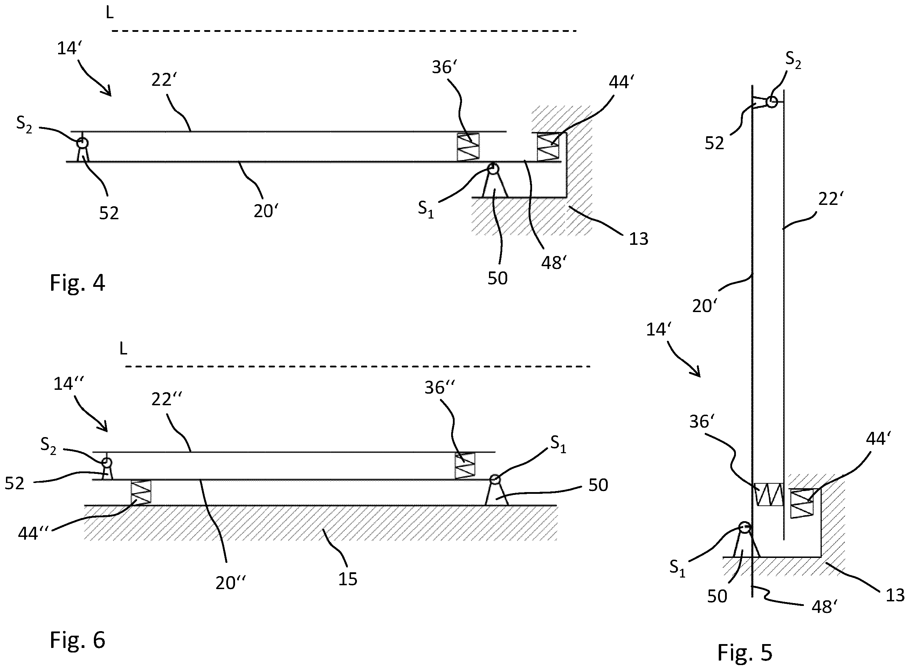

In Figur 4 ist in rein schematischer Ansicht eine weitere Ausgestaltung einer erfindungsgemäßen Standplattform ersichtlich, welche in ihrem Aufbau im Wesentlichen der zuvor erläuterten Ausgestaltung entspricht. So umfasst auch diese Standplattform 14' ein Basiselement 20' und ein sich oberhalb des Basiselements erstreckendes Standelement 22'. Das Basiselement 20' ist über ein erstes Auflager 50 um eine fahrzeugfeste erste Schwenkachse S₁ verschwenkbar. Das Auflager 50 ist fest mit dem Antriebsrahmen 13 verbundenen. Bei der Schwenkbewegung um die erste Schwenkachse S₁ ist das Basiselement 20' über eine erste Federung 44' an dem Antriebsrahmen 13 abgestützt, wobei ein Hebelarm 48' des Basiselements 20' an der ersten Federung 44' angreift. Auch hier trägt das Basiselement 20' das Standelement 22', sodass auch dieses und damit die gesamte Standplattform 14' bei ihrer gemeinsamen Bewegung um die erste Schwenkachse S₁ über die erste Federung 44 an dem Fahrzeugrahmen 13 abgestützt sind. Das Standelement 22' ist zudem um die zweite Schwenkachse S₂ verschwenkbar gegenüber dem Basiselement 20' gelagert und dabei gegenüber dem Basiselement 20' über die zweite Federung 36' abgestützt. In der oben erläuterten Weise kann hierdurch in konstruktiv einfacher Weise eine über die gesamte Standplattform im Wesentlichen konstante Federwirkung erreicht werden. Die Standplattform 14' unterscheidet sich von der zuvor erläuterten Standplattform jedoch darin, dass sie verstaubar ausgebildet ist.

Figur 5 zeigt die Standplattform 14' aus Figur 4 in einer Verstaustellung. In dieser Stellung ist Standplattform 14' um ca. 90° hochgeklappt an das Flurförderzeug und kann somit platzsparend verstaut werden. Zur Verwendung der Standplattform 14' kann diese aus der Verstaustellung in Figur 5 um 90° heruntergeklappt werden in die in Figur 4 ersichtliche Verwendungsstellung. Auch die Darstellung in Figur 5 ist rein schematisch. Der Hebelarm 48' kann dabei grundsätzlich in Ausnehmungen im Fahrzeugrahmen 13 eingreifen.

Figur 6 zeigt in ebenfalls grob schematischer Darstellung eine Standplattform 14" mit einer anders angeordneten ersten Federung 44". Die erste Federung 44" ist hierbei nicht an einem von der zweiten Schwenkachsen S₂ fortweisenden Hebelarm des Basiselements 20" angeordnet, sondern stattdessen an einem zweiten Ende des Basiselements 20" im Bereich der zweiten Schwenkachse S₂ zwischen einer Unterseite des Basiselements 20" und einem sich unterhalb des Basiselements erstreckenden Unterboden 15 des Flurförderzeugs. Das zweite Ende des Basiselements 20" bezeichnet hierbei das einem die erste Schwenkachse S₁ aufweisenden ersten Ende gegenüberliegendes Ende. Auch hier ist die erste Federung 44" also entlang der Fahrzeuglängsachse L in einem Abstand zu der ersten Schwenkachse S₁ angeordnet, wodurch die konstruktiv einfache Ausbildung der Standplattform erreicht wird. Auch ist hier die durch die erste Federung 44" ausgeübte Federwirkung im Bereich der zweiten Schwenkachse S₂ möglichst groß. Somit kann auch durch diese Ausgestaltung eine gleichmäßige Federwirkung über die gesamte Standplattform erreicht werden.

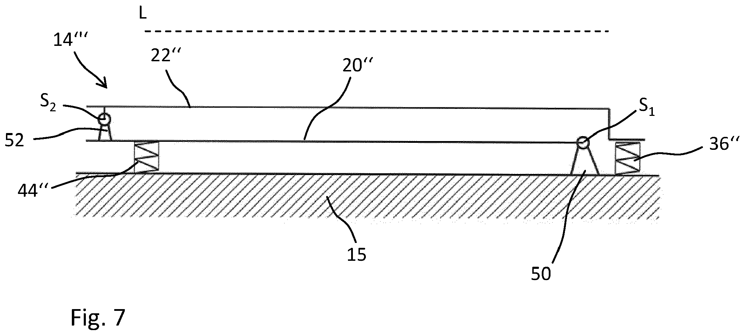

Figur 7 zeigt in ebenfalls grob schematischer Darstellung eine weitere Ausgestaltung einer Standplattform 14'''. Diese unterscheidet sich von der in Figur 6 gezeigten Standplattform 14" lediglich darin, dass die zweite Federung 36" nicht zwischen Standelement 22" und Basiselement 20" angeordnet ist sondern zwischen einem Ende des Standelements 22" und dem Unterboden 15 des Flurförderzeugs. Das Standelement 22" ist bei seiner Schwenkbewegung um die zweite Schwenkachse S₂ somit über die zweite Federung 36" nicht an dem Basiselement (20, 20', 20") sondern unmittelbar an dem Flurförderzeug abgestützt.

### Bezugszeichenliste

- 10: Flurförderzeug
- 12: Antriebsteil
- 13: Antriebsrahmen
- 14, 14', 14", 14''': Standplattform
- 15: Unterboden
- 16: Deichselkopf
- 18: Haltestreben
- 20, 20', 20": Basiselement
- 22, 22', 22": Standelement
- 24: Querstrebe
- 26: Tragarme
- 28: Lagerstange
- 30: Lagerzapfen
- 32: Verstärkungsstreben
- 34: Lageraufnahmen
- 36, 36', 36": zweite Federung
- 38, 38', 38": zweite Federung
- 40: Schraube
- 42: Schraubenaufnehmer
- 44, 44', 44": erste Federung
- 46: Glocke
- 48, 48': Hebelarm
- 50: Auflager
- 52: Auflager

- S₁: erste Schwenkachse
- S2: zweite Schwenkachse

## Patentansprüche

1. Flurförderzeug mit einem Antriebsteil (12) und einer an dem Antriebsteil (12) angeordneten Standplattform (14, 14', 14", 14''') für eine Bedienperson, wobei die Standplattform (14, 14', 14", 14''') ein um eine fahrzeugfeste erste Schwenkachse (S₁) verschwenkbares Basiselement (20, 20', 20") und ein an dem Basiselement (20, 20', 20") um eine zweite Schwenkachse (S₂) verschwenkbar gelagertes Standelement (22, 22', 22") aufweist, wobei die erste Schwenkachse (S₁) und die zweite Schwenkachse (S₂) parallel zueinander verlaufen und entlang einer Fahrzeuglängsachse (L) zueinander versetzt angeordnet sind, wobei das Standelement (22, 22', 22") sich oberhalb des Basiselements (20, 20', 20") erstreckend die Standfläche für die Bedienperson bildet, wobei das Basiselement (20, 20', 20") bei seiner Schwenkbewegung um die erste Schwenkachse (S₁) über eine erste Federung (44, 44', 44") an dem Flurförderzeug (10) abgestützt ist, wobei das Standelement (22, 22', 22") bei seiner Schwenkbewegung um die zweite Schwenkachse (S₂) über eine zweite Federung (36, 36', 36", 38, 38', 38") abgestützt ist, **dadurch gekennzeichnet dass** die erste Federung (44, 44', 44") entlang der Fahrzeuglängsachse (L) in einem Abstand zu der ersten Schwenkachse (S₁) angeordnet ist.

2. Flurförderzeug nach Anspruch 1, **dadurch gekennzeichnet, dass** die erste Federung (44, 44', 44") und die zweite Federung (36, 36', 36", 38, 38', 38") entlang der Fahrzeuglängsachse zueinander versetzt sind.

3. Flurförderzeug nach Anspruch 1 oder 2, **dadurch gekennzeichnet, dass** die erste Schwenkachse (S₁) an einem ersten Ende des Basiselements (20") und die erste Federung (44") an einem dem ersten Ende entlang der Fahrzeuglängsachse (L) gegenüberliegenden zweiten Ende des Basiselements (20") zwischen dem Basiselement (20") und einem sich unterhalb des Basiselements (20") erstreckenden Unterboden (15) des Flurförderzeugs (10) angeordnet ist.

4. Flurförderzeug nach einem der vorhergehenden Ansprüche, **dadurch gekennzeichnet, dass** die erste Federung (44, 44") an einem sich von dem Basiselement (20, 20') erstreckenden Hebelarm (48, 48') angeordnet ist, der sich entlang der Fahrzeuglängsachse (L) von den beiden Schwenkachsen (S₁, S₂) forterstreckt.

5. Flurförderzeug nach einem der vorhergehenden Ansprüche, **dadurch gekennzeichnet, dass** die zweite Federung (36, 36', 36", 38, 38', 38") derart angeordnet ist, dass die durch die zweite Federung (36, 36', 36", 38, 38', 38") ausgeübte Federwirkung im Bereich der ersten Schwenkachse (S₁) am größten ist und/oder dass die erste Federung (44, 44', 44") derart angeordnet ist, dass die durch die erste Federung (44, 44', 44") ausgeübte Federwirkung im Bereich der zweiten Schwenkachse (S₂) am größten ist.

6. Flurförderzeug nach einem der vorhergehenden Ansprüche, **dadurch gekennzeichnet, dass** die zweite Federung (36, 36', 36", 38, 38', 38") im Bereich der ersten Schwenkachse (S₁) angeordnet ist und/oder dass die erste Federung (44, 44', 44") im Bereich der zweiten Schwenkachse (S₂) angeordnet ist.

7. Flurförderzeug nach einem der vorhergehenden Ansprüche, **dadurch gekennzeichnet, dass** die erste Schwenkachse (S₁) an einem mit dem Flurförderzeug (10) verbundenen ersten Ende des Basiselements (20, 20', 20") und die zweite Schwenkachse (S₂) an einem dem ersten Ende auf der Fahrzeuglängsachse (L) gegenüberliegenden zweiten Ende des Basiselements (20, 20', 20") verläuft.

8. Flurförderzeug nach einem der vorhergehenden Ansprüche, **dadurch gekennzeichnet, dass** das Standelement (22, 22', 22") bei seiner Schwenkbewegung um die zweite Schwenkachse (S₂) über die zweite Federung (36, 36', 36", 38, 38', 38") an dem Basiselement (20, 20', 20") oder an dem Flurförderzeug abgestützt ist.

9. Flurförderzeug nach einem der vorhergehenden Ansprüche, **dadurch gekennzeichnet, dass** das Basiselement (20, 20', 20") zwei Tragarme (26) und einen die Tragarme (26) miteinander verbindenden Querarm (24) aufweist.

10. Flurförderzeug nach Anspruch 9, **dadurch gekennzeichnet, dass** die zweite Federung (36, 36', 36", 38, 38', 38") zwischen dem Querarm (24) und dem Standelement (22, 22', 22") angeordnet ist.

11. Flurförderzeug nach einem der vorhergehenden Ansprüche, **dadurch gekennzeichnet, dass** die Standplattform (14') um die erste Schwenkachse (S₁) verstellbar ist zwischen einer ausgeklappten Verwendungsstellung, in der sich das Standelement (22') im Wesentlichen horizontal erstreckt, und einer eingeklappten Verstaustellung an das Flurförderzeug, in der sich das Standelement (22') im Wesentlichen vertikal erstreckt.

12. Flurförderzeug nach einem der vorhergehenden Ansprüche, **dadurch gekennzeichnet, dass** die erste Federung (44, 44', 44") und die zweite Federung (36, 36', 36", 38, 38', 38") unterschiedliche Federkräfte aufweisen.

13. Flurförderzeug nach einem der vorhergehenden Ansprüche, **dadurch gekennzeichnet, dass** die erste Federung (44, 44', 44") ein oder mehrere erste Federelemente aus der folgenden Menge umfasst: Stahlfeder, Schraubenfeder, Tellerfeder, Elastomerfeder, Gummifeder und/oder dass die zweite Federung (36, 36', 36", 38, 38', 38") ein oder mehrere zweite Federelemente aus der folgenden Menge umfasst: Stahlfeder, Schraubenfeder, Tellerfeder, Elastomerfeder, Gummifeder.

14. Flurförderzeug nach einem der vorhergehenden Ansprüche, **gekennzeichnet durch** einen Fixierungsmechanismus (40, 42), der das Standelement (22, 22', 22") an dem Basiselement (20, 20', 20"), insbesondere lösbar, fixiert.

15. Flurförderzeug nach Anspruch 12, **dadurch gekennzeichnet, dass** über den Fixierungsmechanismus (40, 42) die Federwirkung der zweiten Federung (36, 36', 36", 38, 38', 38") einstellbar ist.

## Claims

1. An industrial truck with a drive part (12) and a standing platform (14, 14', 14", 14"') for an operator arranged on the drive part (12), wherein the standing platform (14, 14', 14", 14''') has a base element (20, 20', 20") that can be pivoted about a first pivot axis (S₁) fixed relative to the vehicle, and a standing element (22, 22', 22"), mounted pivotably about a second pivot axis (S₂) on the base element (20, 20', 20"), wherein the first pivot axis (S₁) and the second pivot axis (S₂) run parallel to each other and are arranged offset from each other along a longitudinal vehicle axis (L), wherein the standing element (22, 22', 22") which extends above the base element (20, 20', 20") forms the standing surface for the operator, wherein the base element (20, 20', 20"), in its pivoting movement about the first pivot axis (S₁), is supported on the industrial truck (10) by a first suspension (44, 44', 44"), wherein the standing element (22, 22', 22"), in its pivoting movement about the second pivot axis (S₂), is supported by a second suspension (36, 36', 36", 38, 38', 38"), **characterized in that** the first suspension (44, 44', 44") is arranged along the vehicle axis (L) at a distance from the first pivot axis (S₁).

2. The industrial truck according to claim 1, **characterized in that** the first suspension (44, 44', 44") and the second suspension (36, 36', 36", 38, 38', 38") are offset from each other along the longitudinal vehicle axis.

3. The industrial truck according to claim 1 and 2, **characterized in that** the first pivot axis (S₁) is arranged at a first end of the base element (20"), and the first suspension (44") is arranged at a second end of the base element (20") opposite the first end along the longitudinal vehicle axle axis (L) between the base element (20") and a subfloor (15) of the industrial truck (10) extending below the base element (20").

4. The industrial truck according to one of the previous claims, **characterized in that** the first suspension (44, 44") is arranged on a lever arm (40, 48') that extends from the base element (20, 20') and projects from the two pivot axes (S₁, S₂) along the longitudinal vehicle axis (L).

5. The industrial truck according to one of the previous claims, **characterized in that** the second suspension (36, 36', 36", 38, 38', 38") is arranged such that the spring effect exerted by the second suspension (36, 36', 36", 38, 38', 38") is greatest in the region of the first pivot axis (S₁), and/or first suspension (44, 44', 44") is arranged such the spring effect exerted by the first suspension (44, 44', 44") is greatest in the region of the second pivot axis (S₂).

6. The industrial truck according to the one of the previous claims, **characterized in that** the second suspension (36, 36', 36", 38, 38', 38") is arranged in the region of the first pivot axis (S₁), and/or the first suspension (44, 44', 44") is arranged in the region of the second pivot axis (S₂).

7. The industrial truck according to one of the previous claims, **characterized in that** the first pivot axis (S₁) runs at a first end of the base element (20, 20', 20") connected to the industrial truck (10), and the second pivot axis runs at a second end (S₂) of the base element (20, 20', 20") opposite the first end on the longitudinal vehicle access (L).

8. The industrial truck according to one of the previous claims, **characterized in that** the standing element (22, 22', 22"), in its pivoting movement about the second pivot axis (S₁), is supported on the base element (20, 20', 20") or on the industrial truck by the second suspension (36, 36', 36", 38, 38', 38").

9. The industrial truck according to one of the previous claims, **characterized in that** the base element (20, 20', 20") has two support arms (26) and one transverse arm (24) connecting the bearing arms (26) to each other.

10. The industrial truck according to claim 9, **characterized in that** the second suspension (36, 36', 36", 38, 38', 38") is arranged between the transverse arm (24) and the standing element (22, 22', 22").

11. The industrial truck according to one of the previous claims, **characterized in that** the standing platform (14') is adjustable about the first pivot axis (S₁) between an unfolded position for use in which the standing element (22') extends substantially horizontally, and a folded storage position on the industrial truck in which the standing element (22') extends substantially vertically.

12. The industrial truck according to one of the previous claims, **characterized in that** the first suspension (44, 44', 44") and the second suspension (36, 36', 36", 38, 38', 38") have different spring forces.

13. The industrial truck according to one of the previous claims, **characterized in that** the first suspension (44, 44', 44") comprises one or more first spring elements from the following group: steel spring, helical spring, plate spring, elastomer spring, rubber spring, and/or the second suspension (36, 36', 36", 38, 38', 38") comprises one or more or second spring elements from the following group: steel spring, helical spring, plate spring, elastomer spring rubber spring.

14. The industrial truck according to one of the previous claims, **characterized by** a fixing mechanism (40, 42) that fixes the standing element (22, 22', 22"), in particular releasably, to the base element (20, 20', 20").

15. The industrial truck according to claim 12, **characterized in that** the spring effect of the second suspension (36, 36', 36", 38, 38', 38") is adjustable by the fixing mechanism (40, 42).

## Revendications

1. Chariot de manutention comprenant une partie d'entraînement (12) et une plateforme porteuse (14, 14', 14", 14''') pour un opérateur, dans lequel la plateforme porteuse (14, 14', 14", 14''') présente un élément de base (20, 20', 20") apte à pivoter autour d'un premier axe de pivotement (S₁) disposé fixement dans le véhicule et un élément porteur (22, 22', 22") monté sur l'élément de base (20, 20', 20") de façon pivotante autour d'un deuxième axe de pivotement (S₂), dans lequel le premier axe de pivotement (S₁) et le deuxième axe de pivotement (S₂) s'étendent parallèlement l'un à l'autre et sont disposés de façon décalée l'un par rapport à l'autre le long d'un axe longitudinal de véhicule (L), dans lequel l'élément porteur (22, 22', 22") forme la surface porteuse pour l'opérateur en s'étendant au-dessus de l'élément de base (20, 20', 20"), dans lequel l'élément de base (20, 20', 20") s'appuie sur le chariot de manutention (10) par le biais d'un premier système de ressorts (44, 44', 44") lors de son mouvement de pivotement autour du premier axe de pivotement (S₁), dans lequel l'élément porteur (22, 22', 22") est soutenu par un deuxième système de ressorts (36, 36', 36", 38, 38', 38") lors de son mouvement de pivotement autour du deuxième axe de pivotement (S₂), **caractérisé en ce que** le premier système de ressorts (44, 44', 44") est disposé à une distance du premier axe de pivotement (S₁) le long de l'axe longitudinal de véhicule (L).

2. Chariot de manutention selon la revendication 1, **caractérisé en ce que** le premier système de ressorts (44, 44', 44") et le deuxième système de ressorts (36, 36', 36", 38, 38', 38") sont décalés l'un par rapport à l'autre le long de l'axe longitudinal de véhicule.

3. Chariot de manutention selon la revendication 1 ou 2, **caractérisé en ce que** le premier axe de pivotement (S₁) est disposé à une première extrémité de l'élément de base (20") et le premier système de ressorts (44") est disposé à une deuxième extrémité de l'élément de base (20") opposée à la première extrémité le long de l'axe longitudinal de véhicule (L), entre l'élément de base (20") et un soubassement (15) du chariot de manutention (10) s'étendant sous l'élément de base (20").

4. Chariot de manutention selon l'une des revendications précédentes, **caractérisé en ce que** le premier système de ressorts (44, 44") est disposé sur un bras de levier (48, 48') s'étendant à partir de l'élément de base (20, 20'), lequel s'étend à partir des deux axes de pivotement (S₁, S₂) le long de l'axe longitudinal de véhicule (L).

5. Chariot de manutention selon l'une des revendications précédentes, **caractérisé en ce que** le deuxième système de ressorts (36, 36', 36", 38, 38', 38") est disposé de telle façon que l'effet de ressort exercé par le deuxième système de ressorts (36, 36', 36", 38, 38', 38") est maximale dans la région du premier axe de pivotement (S₁) et/ou **en ce que** le premier système de ressorts (44, 44', 44") est disposé de telle façon que l'effet de ressort exercé par le premier système de ressorts (44, 44', 44") est maximal dans la région du deuxième axe de pivotement (S₂).

6. Chariot de manutention selon l'une des revendications précédentes, **caractérisé en ce que** le deuxième système de ressorts (36, 36', 36", 38, 38', 38") est disposé dans la région du premier axe de pivotement (S₁) et/ou **en ce que** le premier système de ressorts (44, 44', 44") est disposé dans la région du deuxième axe de pivotement (S₂).

7. Chariot de manutention selon l'une des revendications précédentes, **caractérisé en ce que** le premier axe de pivotement (S₁) s'étend à une première extrémité de l'élément de base (20, 20', 20") reliée au chariot de manutention (10) et le deuxième axe de pivotement (S₂) s'étend à une deuxième extrémité de l'élément de base (20, 20', 20") opposée à la première extrémité sur l'axe longitudinal de véhicule (L).

8. Chariot de manutention selon l'une des revendications précédentes, **caractérisé en ce que** l'élément porteur (22, 22', 22") s'appuie sur l'élément de base (20, 20', 20") ou sur le chariot de manutention par le biais du deuxième système de ressorts (36, 36', 36", 38, 38', 38") lors d'un mouvement de pivotement autour du deuxième axe de pivotement (S₂) .

9. Chariot de manutention selon l'une des revendications précédentes, **caractérisé en ce que** l'élément de base (20, 20', 20") présente deux bras de support (26) et un bras transversal (24) reliant les bras de support (26) entre eux.

10. Chariot de manutention selon la revendication 9, **caractérisé en ce que** le deuxième système de ressorts (36, 36', 36", 38, 38', 38") est disposé entre le bras transversal (24) et l'élément porteur (22, 22', 22").

11. Chariot de manutention selon l'une des revendications précédentes, **caractérisé en ce que** la plateforme porteuse (14') peut être ajusté autour du premier axe de pivotement (S₁), entre une position d'utilisation dépliée, dans laquelle l'élément porteur (22') s'étend essentiellement horizontalement, et une position de rangement repliée contre le chariot de manutention, dans laquelle l'élément porteur (22') s'étend essentiellement verticalement.

12. Chariot de manutention selon l'une des revendications précédentes, **caractérisé en ce que** le premier système de ressorts (44, 44', 44") et le deuxième système de ressorts (36, 36', 36", 38, 38', 38") présentent des forces de ressort différentes.

13. Chariot de manutention selon l'une des revendications précédentes, **caractérisé en ce que** le premier système de ressorts (44, 44', 44") comporte un ou plusieurs premiers éléments de ressort parmi la quantité suivante : ressort en acier, ressort hélicoïdal, ressort à disque, ressort élastomère, ressort en caoutchouc et/ou **en ce que** le deuxième système de ressorts (36, 36', 36", 38, 38', 38") comporte un ou plusieurs deuxièmes éléments de ressort parmi la quantité suivante : ressort en acier, ressort hélicoïdal, ressort à disque, ressort élastomère, ressort en caoutchouc.

14. Chariot de manutention selon l'une des revendications précédentes, **caractérisé par** un mécanisme de fixation (40, 42) fixant l'élément porteur (22, 22', 22") sur l'élément de base (20, 20', 20"), en particulier de façon détachable.

15. Chariot de manutention selon la revendication 12, **caractérisé en ce que** l'effet de ressort du deuxième système de ressorts (36, 36', 36", 38, 38', 38") est réglable par le biais du mécanisme de fixation (40, 42).
